# EUROPÄISCHE PATENTSCHRIFT

(11) **EP 1 140 448 B1**
(45) Veröffentlichungstag und Bekanntmachung des Hinweises auf die Patenterteilung: **19.06.2002**
(21) Anmeldenummer: 99962269.9
(22) Anmeldetag: 28.12.1999
(51) Int. Cl.: B27N 3/28, B29C 47/40, B29C 47/76, B29C 47/92

(54) **VERFAHREN UND VORRICHTUNG ZUM KONTINUIERLICHEN HERSTELLEN VON FORMKÖRPERN**
METHOD AND DEVICE FOR CONTINUOUSLY PRODUCING SHAPED BODIES
PROCEDE ET DISPOSITIF POUR PRODUIRE EN CONTINU DES CORPS MOULES

(30) Priorität: 30.12.1998 DE 19860836
(43) Veröffentlichungstag der Anmeldung: 10.10.2001
(73) Patentinhaber: Haller Formholz, 74523 Schwäbisch Hall-Sulzdorf (DE)
(72) Erfinder: BECKER, Silvan, D-74589 Satteldorf (DE); TRAUB, Heinz, D-74572 Blaufelden (DE)
(74) Vertreter: Wunderlich, Rainer, Dipl.-Ing.
(86) Internationale Anmeldenummer: EP9910427
(87) Internationale Veröffentlichungsnummer: WO0040384

(56) Entgegenhaltungen:
- EP-A- 0 165 093
- EP-A- 0 908 281
- WO-A-90/14935
- DE-A- 3 207 432
- FR-A- 2 564 374
- FR-A- 2 609 927

## Beschreibung

Die Erfindung betrifft ein Verfahren und eine Vorrichtung zum kontinuierlichen Herstellen von Formkörpern, welche zu einem überwiegenden Teil aus kleinteiligem Pflanzenmaterial bestehen, welches in ein thermoplastisches Material eingebunden ist.

Derartige Formkörper aus Holzspäne, welche in ein thermoplastisches Material eingebunden sind, finden seit längerer Zeit Anwendung in den verschiedensten Gebieten, da solche Formkörper gegenüber Holz zahlreiche Vorteile besitzen. Diese bestehen insbesondere hinsichtlich Form- und Witterungsbeständigkeit sowie Unempfindlichkeit gegen Pilz- und Insektenbefall, wobei mit Holz vergleichbare Festigkeitsund Verarbeitungseigenschaften gegeben sind. Zudem können damit pflanzliche Abfallstoffe, wie Holzmehl oder Holzspäne, einer sinnvollen Verwertung zugeführt werden.

Es ist bekannt, solche Formkörper, die überwiegend - also zu über 50 % - aus einem kleinteiligen Pflanzenmaterial bestehen, diskontinuierlich herzustellen. Dabei werden die zu formenden Massen in Pressformen gefüllt, in denen unter Druck- und Temperatureinwirkung die gewünschte Form erzeugt wird.

Die DE-OS 22 45 871 offenbart, Holzspäne und einen Kunststoff zu mischen und die Mischung anschließend in einen Extruder einzuführen. In dem Extruder soll die Mischung sehr rasch auf eine Extrusionstemperatur erwärmt und durch Entgasen entfeuchtet werden. Bei diesem Verfahren kann in dem extrudierten Produkt noch unerwünschter Wasserdampf vorhanden sein, welcher dem Produkt durch eine spezielle Preßvorrichtung im Anschluß an den Extruder entzogen werden muß.

Aus der FR-A-26 09 927 ist ein Verfahren und eine Vorrichtung zum kontinuierlichen Herstellen von Formkörpern bekannt, welche aus in einem thermoplastischen Material eingebundenen kleinteiligem Pflanzenmaterial bestehen. Bei diesem bekannten Verfahren wird zunächst nur das kleinteilige Pflanzenmaterial in einen einleitenden Abschnitt eines Extruders gefördert und in diesem definiert getrocknet. Nach dem Trocknen wird dem Pflanzenmaterial das thermoplastische Material zugeführt, das im Extruder mit dem Pflanzenmaterial vermengt und anschließend durch eine Austrittsöffnung ausgegeben wird.

Ein gattungsgemäßer Stand der Technik geht aus der EP-A-0 165 093 hervor, die gleichfalls ein Verfahren und eine Vorrichtung zum Herstellen derartiger Formkörper beschreibt. Bei diesem bekannten Stand der Technik wird gleichfalls ein Extruder verwendet, der einen einleitenden Extruderabschnitt aufweist, in den zunächst nur das kleinteilige Pflanzenmaterial gefördert wird. Die beiden Extruderwellen weisen bei diesem bekannten Stand der Technik eine Förderzone und eine Verdichterzone auf, wobei das Pflanzenmaterial in der Verdichterzone durch Heizeinrichtungen zum Entfeuchten erwärmt wird. Nach dem Entfeuchten wird das Pflanzenmaterial in eine an den Extruderwellen ausgebildete Mischzone gefördert, in der das thermoplastische Material in den Extruder transportiert wird. In Extruderrichtung gesehen schließt sich an die Mischzone eine weitere Verdichterzone sowie eine sich an diese anschließende Knetzone an, welche ihrerseits in eine Förderzone übergeht, mit deren Hilfe das Materialgemisch aus dem Extruder gefördert wird.

Bei diesem bekannten Verfahren bzw. dieser bekannten Vorrichtung wird das Pflanzenmaterial nur ein einziges Mal entfeuchtet, so daß bei der dem Entfeuchten nachfolgenden Zugabe des thermoplastischen Materials, insbesondere bei großen Temperaturunterschieden zwischen dem Pflanzenmaterial und dem thermoplastischen Material, das Problem besteht, daß noch Restfeuchte aus dem Pflanzenmaterial verdampft und in das Materialgemisch in der Knetzone eingearbeitet wird, so daß im fertigen Formkörper unerwünschte Gaseinschlüsse entstehen können.

Der Erfindung liegt die **Aufgabe** zugrunde, ein Verfahren und eine Vorrichtung zum Herstellen von Formkörpern anzugeben, mit denen aus Formmassen mit einem überwiegenden Anteil von kleinteiligem Pflanzenmaterial Formkörper in besonders witschaftlicher Weise kontinuierlich und formgenau herstellbar sind.

Die Aufgabe wird nach der Erfindung zum einen durch ein Verfahren mit den Merkmalen des Anspruchs 1 und zum anderen durch eine Vorrichtung mit den Merkmalen des Anspruchs 13 gelöst.

Erfindungsgemäß ist ein Verfahren zum kontinuierlichen Herstellen von Formkörpern, welche zu einem überwiegenden Teil aus kleinteiligem Pflanzenmaterial bestehen, welches in ein thermoplastisches Material eingebunden ist, vorgesehen, bei dem das kleinteilige Pflanzenmaterial in einen Extruder eingeleitet wird, das thermoplastische Material in einem festen oder flüssigen Zustand dem Extruder zugeführt wird, das Pflanzenmaterial und das thermoplastische Material vermischt und unter Druck verdichtet wird, wobei eine definierte Temperatur eingestellt wird, die über einer Schmelztemperatur des thermoplastischen Materials liegt, der Druck in zumindest einem Extruderabschnitt desselben Extruders zumindest dreimal auf einen Wert vermindert wird, bei dem eine Restfeuchte des Pflanzenmaterials in Wasserdampf umgesetzt wird, welcher aus dem Extruder abgeführt wird, und in einem abschließenden Extruderabschnitt die erhitzte und entfeuchtete Materialmischung aus dem Pflanzenmaterial und dem aufgeschmolzenen thermoplastischen Material verdichtet und zu dem gewünschten Formkörper extrudiert wird.

Ein Grundgedanke der Erfindung basiert auf der Erkenntnis, daß es für eine gute Extrudierbarkeit der Masse auf eine gute Bindung zwischen dem thermoplastischen Material und der Oberfläche der pflanzlichen Partikel ankommt. Eine gute Bindung wird erfindungsgemäß erreicht, indem durch den Verfahrensablauf eine gute Erwärmung des Pflanzenmaterials von bis zu 250°C erzielt wird. Eine mögliche Ursache für den erreichten positiven Effekt kann darin gesehen werden, daß das aufgeschmolzene thermoplastische Material die mikroskopisch rauhe und faserige Oberfläche der verfahrensbedingt erwärmten Pflanzenteile in Verbindung mit der intensiven mechanischen Bearbeitung in dem Extruder nahezu optimal benetzen kann. Es ergeben sich so sehr hohe Van-der-Waals-sche Bindungskräfte zwischen dem Pflanzenmaterial und dem Thermoplasten. Hierdurch ist der notwendige Zusammenhalt beim Austritt der Formmasse aus dem Extruder bis zum Zeitpunkt des vollständigen Erstarrens der Masse sichergestellt.

Wesentlich ist auch, Lufteinschlüsse sowie aus einer Restfeuchtigkeit gebildeten Dampf im Verlauf der Verarbeitung im Extruder weitestgehend abzuführen, was durch mehrmaliges Entgasen erreichbar ist. Es hat sich in diesem Zusammenhang als vorteilhaft erwiesen, das kleinteilige Pflanzenmaterial in dem Extruder bereits vor der Zuführung des thermoplastischen Materials mindestens dreimal einem Verarbeitungszyklus zu unterwerfen, der die Verfahrensschritte Verdichten sowie anschließendes Entspannen und Entgasen umfaßt.

Dadurch ist ein besonders zuverlässiges Abführen der Restfeuchte aus dem Pflanzenmaterial gewährleistet.

Durch das erfindungsgemäße Verfahren können Formkörper mit einem Anteil von über 50 % an kleinteiligem Pflanzenmaterial kontinuierlich in einem stabilen Prozeß hergestellt werden. Als Pflanzenmaterial können dabei in großen Mengen anfallende pflanzliche Abfallstoffe, wie Holzmehl, Holzspäne, Getreidespelze, Stroh, Bagasse (Zuckerrohrstroh), Zellulose-, Kakao-, Kokos- oder Palmfasern etc., verwendet und einer sinnvollen Verwertung zugeführt werden.

Das für dieses Verfahren einsetzbare zerkleinerte Pflanzenmaterial umfaßt Partikel in einer Größe von vorzugsweise zwischen 0,5 mm und 10 mm, wobei jedoch der Einsatz kleinerer und größerer Partikel nicht ausgeschlossen ist.

Es ist erfindungsgemäß, daß das Pflanzenmaterial lose oder als vorverdichtete Preßlinge getrennt von dem thermoplastischen Material in den Extruder eingeleitet wird. Die Zuführung dieser Materialien durch getrennte Zuführ- oder Dosiereinrichtungen erlaubt eine hohe Dosiergenauigkeit. Bei Verwendung eines relativ feuchten Pflanzenmateriales ist es besonders wichtig, diesem in dem Extruder zunächst ohne das thermoplastische Material durch Verdichten und Erhitzen sowie anschließendes Druckvermindern Feuchtigkeit zu entziehen, wobei erst daran anschließend das thermoplastische Material der aufgeheizten Masse zugeführt wird. Gute Ergebnisse lassen sich erzielen, wenn ein Pflanzenmaterial mit einer Restfeuchte von weniger als 25 % bei Normal- oder Umgebungstemperatur eingesetzt wird.

Die Erfindung geht den Weg, das Pflanzenmaterial in einem im wesentlichen naturbelassenen Zustand zu verwenden, in welchem dieses anfällt. Ein derartiges unbehandeltes oder allenfalls durch Pressen vorverdichtetes Material kann einen relativ hohen Feuchtigkeitsgehalt zwischen 10 bis 20 % aufweisen. Erfindungsgemäß wird die Feuchtigkeit des Pflanzenmaterials bei einem Vorwärmen und/oder in dem Extruder beim Verdichten und Entspannen vermindert. Die Temperatur des Pflanzenmaterials liegt dabei unterhalb der Verkokungstemperatur und über dem Schmelzpunkt des Thermoplasten, insbesondere zwischen 120°C und 200°C. Zur ausreichenden Verdichtung von hochvolumigem Material wird im ersten Extruderabschnitt durch eine entsprechende Ausbildung der Extruderschneckenwendeln ein Druck eingestellt, welcher vorzugsweise zwischen 5 und 50 bar beträgt. Sollte sich die gewünschte Temperatur nicht schon durch die starke Verdichtung des Extrusionsmateriales einstellen, so können an dem Extrudergehäuse sowie in der Extruderschnecke zusätzliche Heizelemente zur Temperaturführung vorgesehen sein. Mit Erreichen der gewünschten Druck- und Temperaturwerte wird in einem anschließenden Extruderabschnitt der Druck schlagartig stark herabgesetzt, vorzugsweise auf einen Atmosphärendruck oder sogar einen Unterdruck. Durch diese kurzfristige und drastische Druckherabsetzung wird schlagartig und somit ohne wesentliche Temperaturverluste in dem Pflanzenmaterial befindliche Restfeuchte in Wasserdampf umgesetzt, welcher aus dem Extruder an mehreren Stellen abgeführt wird. Die Extrusionsmasse wird abschließend verdichtet und zur gewünschten Form ausextrudiert.

Neben der verbesserten Festigkeit des erfindungsgemäß hergestellten Formkörpers ist das Verfahren nach der Erfindung auch besonders wirtschaftlich. So kann das Verfahren in lediglich einer einzigen Extrusionsmaschine durchgeführt werden. Des weiteren ergibt sich ein sehr geringer Energiebedarf, da nur ein einmaliges Aufschmelzen des thermoplastischen Materials notwendig ist.

Zur Herstellung besonders fester Formkörper ist es nach der Erfindung vorgesehen, daß das Pflanzenmaterial einen Anteil von 70 % bis 90 % und das thermoplastische Material einen Anteil von 10 % bis 30 % der dem Extruder zugeführten Masse bilden. Mit einem relativ hohen Anteil an Pflanzenmaterial ergibt sich auch ein kostengünstiges Endprodukt, da für das erfindungsgemäße Verfahren herkömmliche Naturstoffe einsetzbar sind, die beispielsweise in der holzverarbeitenden Industrie als Abfallprodukt anfallen. Als thermoplastische Materialien können insbesondere thermoplastische Elastomere, beispielsweise Polypropylen, Polystyrol oder vergleichbare Kunststoffe zum Einsatz kommen.

Erfindungsgemäß wird ein besonders umweltverträgliches Produkt dadurch erreicht, daß ein thermoplastisches Material verwendet wird, welches biologisch abbaubar ist. Ein derartiges Material können beispielsweise natürliche Kautschuke oder Latices sein. Grundsätzlich sind auch stärkehaltige Ausgangsmaterialien sowie weitere Naturprodukte einsetzbar, welche ein geeignetes thermoplastisches Verhalten besitzen. Voraussetzung ist, daß diese Materialien in einem Temperaturbereich unterhalb der Verkokungstemperatur des Pflanzenmateriales, insbesondere bei einer Temperatur zwischen 100 und 200°C, aufschmelzen und nach Erstarren einen festen Verbund mit dem Pflanzenmaterial eingehen.

Es kann weiterhin auch eine Verfahrensvariante bevorzugt sein, bei der das thermoplastische Material in einem aufgeschmolzenen Zustand in den Extruder eingebracht wird. Dies kann insbesondere dann von Vorteil sein, wenn die Durchmischung des kleinteiligen Pflanzenmaterials mit dem thermoplastischen Material auf einer vergleichsweise kurzen Strecke des Extruders erfolgt. Wenn das thermoplastische Material bereits aufgeschmolzen zugeführt wird, entsteht kein Zeitverlust durch Aufschmelzen von Pellets oder eines Granulats, sondern das thermoplastische Material beginnt sofort bei Kontakt mit dem kleinteiligen Pflanzenmaterial dieses zu benetzen.

Für eine weitere Erhöhung der Festigkeit des Endproduktes ist es erfindungsgemäß vorteilhaft, daß zusätzlich ein Fasermaterial in den Extruder eingeleitet und in die Extrusionsmasse eingearbeitet wird. Hierfür können insbesondere organische Materialien aus Pflanzen- und/oder Tierfasern und Haare, aber auch synthetische Textilien und technische Fasern, wie Glas-, Mineral- oder Metallfasern zum Einsatz kommen. Diese Zuführung des Fasermaterials kann an einer beliebigen Stelle des Extruders erfolgen. Es können so Produkte mit einer erhöhten Bruchfestigkeit geschaffen werden.

Ein optisch ansprechendes Endprodukt wird dadurch erreicht, daß zusätzlich zumindest ein Farbstoff vorgesehen wird. Dabei kann das Pflanzenmaterial vorab gefärbt werden und/oder ein Farbstoff in den Extruder eingeleitet werden. Neben synthetischen Farben und Lacken können auch natürliche Färbemittel auf pflanzlicher oder mineralischer Basis zum Einsatz kommen, wodurch eine weiterhin gute Umweltverträglichkeit gewährleistet ist. Mit der Zumischung von Farbstoffen können Formkörper in jeder beliebigen Farbe hergestellt werden, welche im Anschluß an die Formgebung keinerlei Oberflächenbehandlung mehr bedürfen. Gegenüber herkömmlich lackierten Produkten besteht der Vorteil, daß selbst bei unerwünschten Kratzern oder nach einer materialabhebenden Bearbeitung des Produktes keine Beeinträchtigung der Färbung eintritt.

Die Erfindung ist in vorteilhafter Weise dahingehend weitergebildet, daß zusätzlich ein stärkehaltiges Material in den Extruder eingeleitet wird. Derartige Materialien können physikalisch oder chemisch gewonnene Stärken sowie stärkehaltige Mehle oder feinteilige, stärkehaltige Pflanzenteile sein. Derartige Materialien, beispielsweise aus Mais oder Reis, stellen einen billigen Füll- und Bindestoff dar, welcher zudem die Verrottbarkeit für einen besonders umweltverträglichen, recyclierbaren oder kompostierbaren Formkörper verbessert. Es kann auch ein Gleitmittel, wie ein natürliches Öl oder ein Harz, zugeführt werden, wodurch eine besonders gute Vermischung und Verdichtung sowie eine glatte Oberfläche des Endproduktes erreicht wird.

Nach einem weiteren Aspekt der Erfindung ist es vorteilhaft, daß vor dem Ausextrudieren der homogenisierten Extrusionsmasse dieser Gas in einer definierten Menge zugeführt wird. Durch das gleichmäßige Einarbeiten der definierten Gasmenge nach dem letztmaligen Entgasen beim abschließenden Vermischen kann eine gewünschte Porosität beim Endprodukt eingestellt werden. Durch das gezielte Begasen oder Aufschäumen der Extrusionsmasse kann beispielsweise eine erhöhte Isoliereigenschaft oder geringere Dichte eingestellt werden.

Mit dem erfindungsgemäßen Verfahren kann die Extrusionsmasse durch ein Formwerkzeug am Ausgang der Extrusionspresse zu einem Stangenmaterial extrudiert werden. Aufgrund der mit der Erfindung erzielten guten Verbindung zwischen dem Pflanzenmaterial und dem thermoplastischen Material ist es möglich, daß die Extrusionsmasse durch ein Formwerkzeug am Ausgang des Extruders zu einem massiven oder hohlen Stangenmaterial extrudiert wird, welches auch nach Durchtritt durch das Formwerkzeug zu einer gewünschten Form biegbar ist. Es können so schlangenförmige oder andere bogenförmige Konturen an einem Stangenmaterial hergestellt werden. Für einen kontinuierlichen Betrieb des Extruders sind geeignete Schneid- oder Sägeeinrichtungen vorgesehen, durch welche das Stangenmaterial auf eine gewünschte Größe abgelängt wird. Es kann dabei auch ein Granulat hergestellt werden, welches später in einem herkömmlichen Extruder verarbeitet wird, wobei dann das Problem einer hohen Restfeuchte in der Materialmischung nicht mehr besteht.

Eine bevorzugte Ausführungsform des erfindungsgemäßen Verfahrens besteht weiter darin, daß ein Erwärmen des Pflanzenmaterials in dem Extruder und zusätzlich beim Transport zu dem Extruder erfolgt und daß dabei ein definierter, gleichmäßiger Zustand der Partikeln des Pflanzenmaterials eingestellt wird. Der Zustand der Partikeln des Pflanzenmaterials kann vorzugsweise mittels eines Sensors überwacht werden. Durch einen möglichst einheitlichen Zustand der einzelnen Pflanzenteile bei Beginn der Verdichtung mit dem aufgeschmolzenen Thermoplasten in dem Extruder wird ein sicherer Materialverbund sowie eine insgesamt stabile Verfahrensdurchführung gewährleistet. Neben einer Vereinheitlichung des Temperaturzustandes ist es auch sinnvoll, den Feuchtigkeitswert sowie gegebenenfalls weitere physikalische Zustandsbedingungen der einzelnen Partikeln zu vereinheitlichen und auf einen definierten Wert einzustellen.

Dabei ist es nach der Erfindung zweckmäßig, daß das Erwärmen unter Verwendung einer Heizeinrichtung erfolgt, welche mittels einer Steuereinrichtung gesteuert wird, so daß bei einer vorgebbaren Transportgeschwindigkeit des Pflanzenmaterials der gewünschte definierte Zustand des Pflanzenmaterials vorliegt. Die Heizeinrichtung kann im ersten Abschnitt des Extruders angeordnet oder diesem vorgeschaltet sein.

Zur Vermeidung unerwünschter Wasserdampf- und Lufteinschlüsse in den zu bildenden Formkörpern ist es erfindungsgemäß vorgesehen, daß in dem Extruder die Materialien einen Verarbeitungszyklus durchlaufen, der Mischen, Verdichten sowie anschließendes Entspannen und Entgasen umfaßt, und daß dieser Verarbeitungszyklus mindestens zweimal, insbesondere dreimal, innerhalb des Extruders durchlaufen wird. Mit einer mehrstufigen Verfahrensführung, insbesondere zwei-, drei- und mehrfachen Entgasung wird eine besonders gute Materialkonsistenz erreicht.

Mit dem erfindungsgemäßen Verfahren können insbesondere Profile, Bretter, Platten, Stangen und Rohre mit nahezu jeder beliebigen Querschnittskontur mit einer besonders hohen Festigkeit auf eine einfache und besonders effiziente Weise hergestellt werden.

Zur Durchführung des zuvor beschriebenen Verfahrens können grundsätzlich herkömmliche Extrusionsvorrichtungen eingesetzt werden, welche üblicherweise ein, zwei oder mehr gleichlaufende Extruderwellen aufweisen. Eine gattungsgemäße Vorrichtung umfaßt einen Extruder, der zwei, in einem Gehäuse gelagerte Extruderwellen, eine Zuführöffnung sowie eine Austrittsöffnung aufweist, wobei an den Extruderwellen zumindest jeweils eine Förderzone und eine Knetzone vorgesehen sind.

Eine besonders geeignete Vorrichtung zur Durchführung des Verfahrens besteht jedoch darin, daß der Extruder als gegenläufiger Extruder ausgebildet ist, bei dem die Extruderwellen gegenläufig angetrieben sind. Erfindungsgemäß sind zumindest drei Verdichterzonen vorgesehen, an denen sich in Extrusionsrichtung jeweils eine Entspannungszone anschließt, bei der ein verringerter Druck vorliegt, wobei im Bereich jeder Entspannungszone jeweils eine Gehäuseöffnung mit einer Gasabzugseinrichtung angeordnet ist.

Um Formkörper aus einem thermoplastischen Material mit einem hohen Anteil an kleinteiligem Pflanzenmaterial herzustellen, ist eine sehr intensive Vermengung der beiden Materialien notwendig. Dies wird insbesondere durch die Verwendung eines gegenläufigen Extruders sichergestellt. Durch die dreifache Entgasung der Extrusionsmasse im Verlauf des Extruders wird zudem ein hinreichendes Entfernen unerwünschter Restfeuchte- und Gaseinschlüsse erzielt, welche einem festen Verbund innerhalb der Extrusionsmasse entgegenwirken. Im Bereich der Entspannungszonen, welche durch entsprechende Ausbildung der Schneckenwendeln erreicht werden, wird ein schneller, kurzfristiger Gasabzug vorzugsweise mittels eines Ventilators oder einer Unterdruckpumpe erzeugt.

Eine nahezu optimale Benetzung der Oberfläche der Teilchen des Pflanzenmaterials wird durch eine gezielte, weitgehend gleichmäßige Erwärmung der Teilchen gefördert. Erfindungsgemäß wird dies dadurch unterstützt, daß eine Heizeinrichtung vorgesehen ist, wobei ein kleinteiliges Pflanzenmaterial durch die Heizeinrichtung auf eine definierte Temperatur erwärmbar ist. Als Heizeinrichtung können hinlänglich bekannte elektrische Heizwicklungen oder Heizwasserleitungen verwendet werden. Es kann auch ein Durchlauf- oder Trommelofen dem Extruder vorgeschaltet sein.

Für ein gleichmäßiges Produktionsergebnis ist es von Vorteil, daß zumindest am Ausgang der Heizeinrichtung ein Sensor angeordnet ist, durch welchen die Temperatur und gegebenenfalls weitere Zustandswerte des erwärmten Pflanzenmaterials ermittelbar sind. Ein Sensor, welcher zur Temperatur- und/oder zur Feuchtigkeitsmessung geeignet ist, kann in bekannter Weise auf einem induktiven oder kapazitiven Funktionsprinzip basieren oder mittels Infrarot-, Mikro- oder Ultra-Hochfrequenzwellen eine berührungslose Messung durchführen.

Für einen gleichmäßigen Betrieb der Vorrichtung ist es erfindungsgemäß, daß eine Steuerung vorgesehen ist, durch welche entsprechend einer vorgebbaren Austragsleistung des Extruders der Antrieb des Extruders sowie die Heizleistung der Heizeinrichtung steuerbar sind. Die Steuerung steht auch mit dem Sensor in Verbindung.

Zum Zwecke einer exakten Zuführung der Extrusionsmaterialien oder von Zusatzstoffen, wie Farbstoffen oder Gleitmitteln, ist es nach einer Weiterbildung der Erfindung vorgesehen, daß beabstandet von der Zuführöffnung an dem Extruder zumindest eine Dosiereinrichtung zur ergänzenden, definierten Materialzuführung angeordnet ist. Die Dosiereinrichtung kann dabei selbst ein Ein- oder Zwei-Wellenextruder sein.

Die Erfindung wird weiter anhand von bevorzugten Ausführungsbeispielen erläutert, welche in stark schematisierter Weise in der Zeichnung dargestellt sind. In der Zeichnung zeigen:
- Fig. 1: eine schematische Querschnittsansicht durch einen Extruder zur Erläuterung der Erfindung; und
- Fig. 2: eine schematische Querschnittsansicht durch eine bevorzugte Ausführungsform der Erfindung.

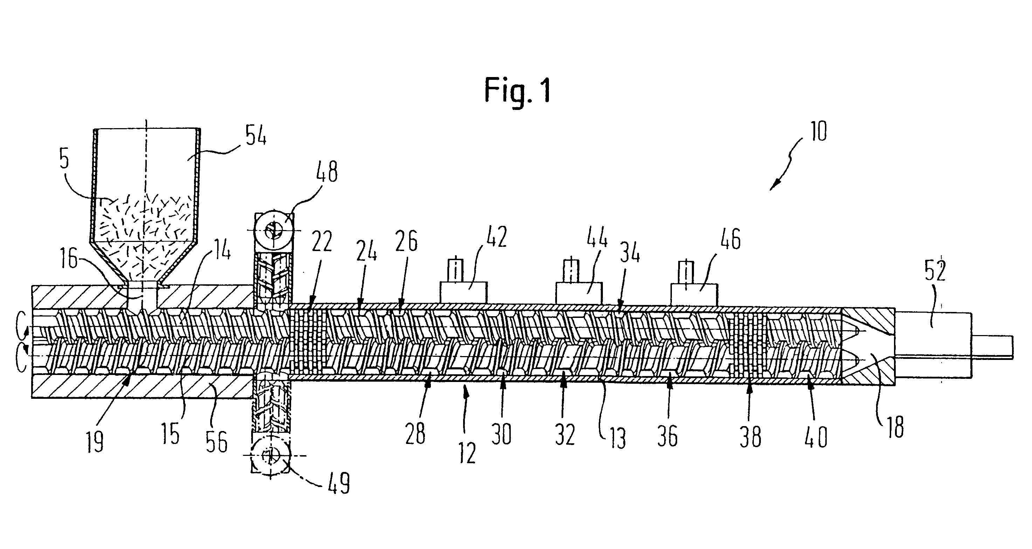

Eine grundsätzlich bekannte Vorrichtung 10 mit einem gegenläufigen Extruder 12 ist Fig. 1 zu entnehmen. In einem Gehäuse 13 sind zwei Extruderwellen 14, 15 gelagert, welche durch einen nicht dargestellten Antrieb entsprechend den durch Pfeile angegebenen Drehrichtungen gegenläufig angetrieben werden. Ein kleinteiliges Pflanzenmaterial 5 wird über eine Zuführöffnung 16 mittels eines Stopftrichters 54 in eine einleitende Förderzone 19 an den Extruderwellen 14 und 15 geleitet. In diesem Bereich ist um das Gehäuse 13 ein zylindrisches Heizelement 56 angeordnet, mit welchem gegebenenfalls das Pflanzenmaterial 5 zusätzlich zur Verdichtungserhitzung durch den Extruder 12 erwärmt werden kann. In der einleitenden Förderzone 19 sind auch die erfindungsgemäßen Gasabzugseinrichtungen angeordnet, welche in Fig. 1 aus Gründen der Übersichtlichkeit nicht dargestellt sind und später erläutert werden. Im Bereich der einleitenden Förderzone 19 kann das thermoplastische Material in einem festen oder bereits aufgeschmolzenen Zustand mittels der Dosiereinrichtungen 48, 49 zugeführt werden, welche um 180° versetzt zueinander am Gehäuse 13 angebracht sind. Mittels der Dosiereinrichtungen 48, 49 können im Falle einer gemeinsamen Zuführung des Pflanzenmateriales mit dem thermoplastischen Material über die Zuführöffnung 16 auch dosiert Zusatzstoffe eingeleitet werden, beispielsweise Farbstoffe oder ein Gleitmittel.

In Transportrichtung des zu extrudierenden Materiales von der Zuführöffnung 16 zu einer Austrittsöffnung 18 des Extruders schließt sich eine erste Knetzone 22 an die einleitende Förderzone 19 an. Die erste Knetzone 22 besteht aus an den Extruderwellen 14, 15 angebrachten Knetfingern, die für eine intensive Durchmischung und weitgehende Homogenisierung der Extrusionsmasse sorgen. Im weiteren Verlauf des Extruders schließt sich dann ein erster Extruderabschnitt an, welcher eine erste Förderzone 24 für eine weitere intensive Durchmischung und Homogenisierung, eine erste Verdichterzone 26 für einen Aufbau eines Druckes von 5 bar bis 50 bar und mehr sowie eine erste Entspannungszone 28 mit einer Verminderung des Extrusionsdruckes umfaßt. Im Bereich der ersten Entspannungszone 28 ist eine erste Gasabzugseinrichtung 42 vorgesehen, durch welche ein Unterdruck in der ersten Entspannungszone 28 einstellbar ist, um verdampfte Restfeuchte oder unerwünschte Gaseinschlüsse aus der Extrusionsmasse abzuziehen.

In Extrusionsrichtung schließt sich dann ein zweiter und ein dritter Extrusionsabschnitt an, welche im wesentlichen wie der erste Extrusionsabschnitt aufgebaut sind. So weist der zweite Extrusionsabschnitt eine zweite Verdichterzone 30 sowie eine zweite Entspannungszone 32 mit einer zweiten Gasabzugseinrichtung 44 auf, wobei der dritte Extrusionsabschnitt ebenfalls eine dritte Verdichterzone 34 und eine dritte Entspannungszone 36 mit einer dritten Gasabzugseinrichtung 46 umfaßt. Hierdurch wird eine insgesamt dreifache Wiederholung des Verarbeitungszyklusses erzielt, welche aus Verdichten, Vermischen, Entspannen und Entgasen besteht.

Durch diese mehrstufige Bearbeitung der Extrusionsmasse wird eine sehr gute Homogenisierung und ein nahezu vollständiges Entgasen sichergestellt werden.

Vor einem Extrudieren der Mischung an der Austrittsöffnung 18 des Extruders 12 durch ein Formwerkzeug 52 ist nochmals eine abschließende Knetzone 38 sowie eine abschließende Förderzone 40 vorgesehen, wodurch eine abschließende Homogenisierung bzw. ein Aufbau eines abschließenden Extrusionsdruckes von bis zu 200 bar und mehr erreicht werden.

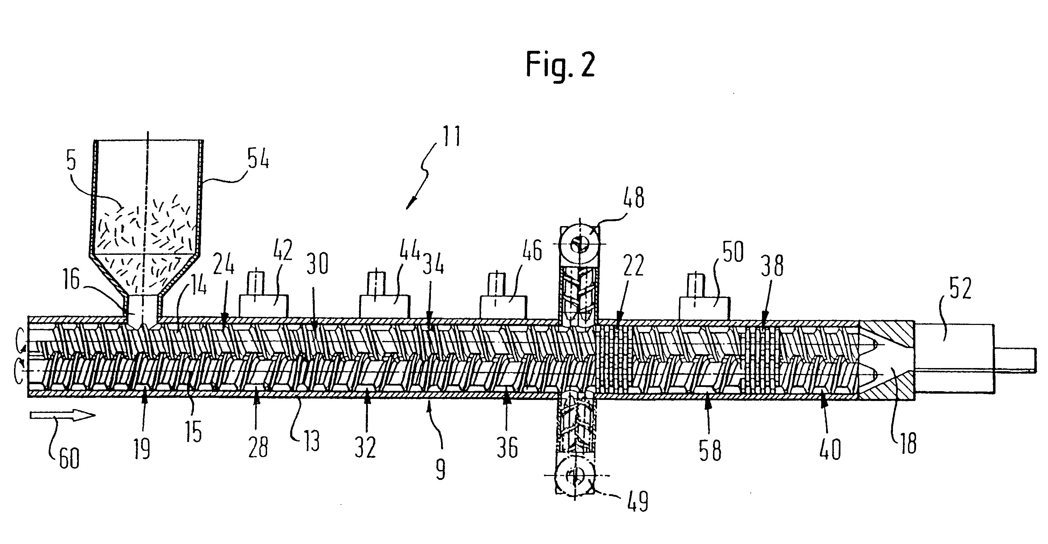

Eine erfindungsgemäße Vorrichtung 11 mit einem gegenläufigen Extruder 9 ist in Figur 2 dargestellt. Es sind in Figur 2 Komponenten und Teile, welche Entsprechungen in der Vorrichtung 10 aus Figur 1 haben, mit denselben Bezugszeichen wie in Figur 1 versehen.

Im Unterschied zu Figur 1 sind bei der Vorrichtung 11 an insgesamt drei Stellen des Extruders 9 (in einer Transportrichtung 60 des Extruders 9) vor der Zuführung des thermoplastischen Materials mittels der Dosiereinrichtungen 48, 49 Gasabzugseinrichtungen 42, 44, 46 sowie dazugehörige Verdichterzonen 30, 34 und Entspannungszonen 28, 32, 36 dargestellt.

Bei der Vorrichtung 11 in Figur 2 ist nach den Dosierungseinrichtungen 48, 49 noch eine vierte Gasabzugseinrichtung 50 mit einer dazugehörigen Entspannungszone 58 vorgesehen.

Es hat sich in der Praxis gezeigt, daß mittels der Vorrichtung 11, d.h. mittels dreifacher Entgasung des kleinteiligen Pflanzenmaterials 5 vor der Zuführung des thermoplastischen Materials eine besonders gute Entfeuchtung und Entgasung des Werkstoffes erreicht werden kann.

## Patentansprüche

1. Verfahren zum kontinuierlichen Herstellen von Formkörpern, welche zu einem überwiegenden Teil aus kleinteiligem Pflanzenmaterial (5) bestehen, welches in ein thermoplastisches Material eingebunden ist, bei dem
- das kleinteilige Pflanzenmaterial (5) zunächst ohne das thermoplastische Material in einen Extruder (9; 12) eingeleitet wird,
- das kleinteilge Pflanzenmaterial (5) in einem einleitenden Extruderabschnitt (19) in Extrusionsrichtung gefördert wird,
- das Pflanzenmaterial hierzu in dem einleitenden Extruderabschnitt (19) einem Verarbeitungszyklus unterworfen wird, bei dem eine Restfeuchte des Pflanzenmaterials (5) in Wasserdampf umgesetzt wird, welcher aus dem Extruder (9; 12) abgeführt wird,
- anschließend das thermoplastische Material in einem festen oder flüssigen Zustand dem Extruder (9; 12) zugeführt wird,
- in dem Extruder das aufgeheizte kleinteilige Pflanzenmaterial mit dem thermoplastischen Material vermischt wird, wobei eine definierte Extrusionstemperatur eingestellt wird, die über einer Schmelztemperatur des thermoplastischen Materials liegt, und
- in einem abschließenden Extruderabschnitt die erhitzte Materialmischung aus dem Pflanzenmaterial (5) und dem aufgeschmolzenen thermoplastischen Material verdichtet und zu dem gewünschten Formkörper extrudiert wird,
**dadurch gekennzeichnet,**
- **daß** bei dem Verarbeitungszyklus zum Entfeuchten das Pflanzenmaterial (5) verdichtet, erhitzt sowie durch anschließendes Druckvermindern entfeuchtet wird,
- **daß** der Verarbeitungszyklus zum Entfeuchten das Pflanzenmaterial (5) in dem einleitenden Extruderabschnitt (19) mindestens dreimal aufeinanderfolgend ausgeführt wird, wobei ein definierter, gleichmäßiger Zustand der Partikeln des Pflanzenmaterials (5) eingestellt wird, und
- **daß** nach der Zugabe des thermoplastischen Materials in zumindest einem nachfolgenden Extruderabschnitt desselben Extruders (9; 12) der Druck auf einen Wert vermindert wird, bei dem eine Restfeuchte des Pflanzenmaterials (5) in Wasserdampf umgesetzt wird, welcher aus dem Extruder (9; 12) abgeführt wird.

2. Verfahren nach Anspruch 1,
**dadurch gekennzeichnet,**
**daß** das Pflanzenmaterial (5) lose oder als vorverdichtete Preßlinge getrennt von dem thermoplastischen Material in den Extruder (9; 12) eingeleitet wird.

3. Verfahren nach einem der Ansprüche 1 oder 2,
**dadurch gekennzeichnet,**
**daß** das Pflanzenmaterial (5) einen Anteil von 70 % bis 90 % und das thermoplastische Material einen Anteil von 10 % bis 30 % der dem Extruder (9; 12) zugeführten Masse bilden.

4. Verfahren nach einem der Ansprüche 1 bis 3,
**dadurch gekennzeichnet,**
**daß** ein thermoplastisches Material verwendet wird, welches biologisch abbaubar ist.

5. Verfahren nach einem der Ansprüche 1 bis 4,
**dadurch gekennzeichnet,**
**daß** das thermoplastische Material in einem aufgeschmolzenen Zustand in den Extruder (9; 12) eingebracht wird.

6. Verfahren nach einem der Ansprüche 1 bis 5,
**dadurch gekennzeichnet,**
**daß** zusätzlich ein Fasermaterial, Farbstoff oder ein stärkehaltiges Material in den Extruder (9; 12) eingeleitet und in die Materialmischung eingearbeitet wird.

7. Verfahren nach einem der Ansprüche 1 bis 6,
**dadurch gekennzeichnet,**
**daß** das kleinteilige Pflanzenmaterial (5) auf eine Temperatur von bis zu 250°C erwärmt wird.

8. Verfahren nach einem der Ansprüche 1 bis 7,
**dadurch gekennzeichnet,**
**daß** das Pflanzenmaterial (5) zusätzlich beim Transport zu dem Extruder (12) erwärmt wird.

9. Verfahren nach Anspruch 7 oder 8,
**dadurch gekennzeichnet,**
**daß** das Erwärmen unter Verwendung einer Heizeinrichtung erfolgt, deren Heizleistung mittels einer Steuereinrichtung gesteuert wird,
so daß bei einer vorgebbaren Transportgeschwindigkeit des Pflanzenmaterials (5) der gewünschte definierte Zustand des Pflanzenmaterials (5) vorliegt.

10. Verfahren nach einem der Ansprüche 1 bis 9,
**dadurch gekennzeichnet,**
**daß** in dem Extruder (9; 12) die Materialien einen Verarbeitungszyklus durchlaufen, der Mischen, Verdichten sowie anschließendes Entspannen und Entgasen umfaßt, und
**daß** dieser Verarbeitungszyklus mindestens zweimal, insbesondere dreimal, innerhalb des Extruders (9; 12) durchlaufen wird.

11. Verfahren nach einem der Ansprüche 1 bis 10,
**dadurch gekennzeichnet,**
**daß** vor dem Ausextrudieren der homogenisierten Materialmischung dieser Gas in einer definierten Menge zugeführt wird.

12. Verfahren nach einem der Ansprüche 1 bis 11,
**dadurch gekennzeichnet,**
**daß** die Materialmischung durch ein Formwerkzeug (52) am Ausgang des Extruders (9; 12) zu einem Stangenmaterial extrudiert wird, welches nach Durchtritt durch das Formwerkzeug (52) zu einer gewünschten Form gebogen und/oder abgelängt wird.

13. Vorrichtung, insbesondere zur Durchführung des Verfahrens nach einem der vorhergehenden Ansprüche, mit einem Doppelwellen-Extruder (9; 12) der zwei in einem Gehäuse (13) gelagerte Extruderwellen (14, 15), eine Zuführöffnung (16) sowie eine Austrittsöffnung (18) aufweist,
mit einer Zuführeinrichtung (54) zum Einleiten ausschließlich kleinteiligen Pflanzenmaterials (5) an einem einleitenden Extruderabschnitt (19), der zum gezielten Erhitzen des kleinteiligen Pfalnzenmaterials (5) ausgebildet ist und mit zumindest einer im Anschluß an den einleitenden Extruderabschnitt (19) angeordneten Dosiereinrichtung (48, 49) zum Einleiten thermoplastischen Materials, wobei an den Extruderwellen (14, 15) im einleitenden Extruderabschnitt (19) zumindest jeweils eine Förderzone (20) und eine sich an diese in Extrusionsrichtung gesehen anschließende, eine geringere Schneckensteigung als die Förderzone (20) aufweisende Verdichterzone (26) sowie im Anschluß an die Dosiereinrichtung (48, 49) eine Knetzone (22, 38) zum Vermischen des Pflanzenmaterials mit dem thermoplastischen Material und mindestens eine sich an diese anschließende weitere Förderzone (40) vorgesehen sind,
**dadurch gekennzeichnet,**
- **daß** im einleitenden Extruderabschnitt (19) mindestens zwei weitere Verdichterzonen (30, 34) vorgesehen sind,
- **daß** sich in Extrusionsrichtung gesehen an jede der drei Verdichterzonen (26, 30, 34) im einleitenden Extruderabschnitt (19) jeweils eine Entspannungszone (28, 32, 36) mit verglichen zur jeweiligen Verdichterzone (26, 30, 34) größeren Schneckensteigung anschließt und
- **daß** im Bereich jeder Entspannungszone (28, 32, 36) jeweils eine Gehäuseöffnung mit einer Gasabzugseinrichtung (42, 44, 46) angeordnet ist.

14. Vorrichtung nach Anspruch 13,
**dadurch gekennzeichnet,**
**daß** eine Heizeinrichtung vorgesehen ist, wobei das kleinteilige Pflanzenmaterial (5) durch die Heizeinrichtung auf eine definierte Temperatur erwärmbar ist, und
**daß** zumindest an einem Ausgang der Heizeinrichtung ein Sensor angeordnet ist, durch welchen die Temperatur und gegebenenfalls weitere Zustandswerte des erwärmten Pflanzenmaterials (5) ermittelbar sind.

15. Vorrichtung nach Anspruch 13 oder 14,
**dadurch gekennzeichnet,**
**daß** eine Steuerung vorgesehen ist, durch welche entsprechend einer vorgebbaren Austragsleistung des Extruders (9; 12) der Antrieb des Extruders (9; 12) sowie die Heizleistung der Heizeinrichtung steuerbar sind.

## Claims

1. Method for the continuous production of mouldings, which preponderantly comprise small-sized plant material (5), which is encapsulated in a thermoplastic material, in which
- the small-sized plant material (5) is introduced into an extruder (9; 12), initially without the thermoplastic material,
- the small-sized plant material (5) is delivered in the extrusion direction in an introductory extruder section (19),
- for this the plant material undergoes in the introductory extruder section (19) a processing cycle, in which residual moisture of the plant material (5) is transformed into water vapour which is removed from the extruder (9; 12),
- subsequently the thermoplastic material is supplied to the extruder (9; 12) in a solid or liquid state,
- in the extruder the heated, small-sized plant material is mixed with the thermoplastic material, wherein a defined extrusion temperature is set, which is above the melting point of the thermoplastic material, and
- in a final extruder section, the heated material mixture of the plant material (5) and the melted thermoplastic material is compacted and extruded to the desired moulding,
**characterized in that**
- during the processing cycle for dehumidifying the plant material (5) is compacted, heated and dehumidified by a following pressure reduction,
- the processing cycle for dehumidifying the plant material (5) is carried out at least three successive times, wherein a defined, uniform state of the plant material (5) particles is set, and
- after the supply of the thermoplastic material into at least one following extruder section of the same extruder (9; 12) the pressure is reduced to a value, at which a residual moisture of the plant material (5) is transformed into water vapour, which is removed from the extruder (9; 12).

2. Method according to claim 1,
**characterized in that**
the plant material (5) is introduced loose or as precompacted compacts into the extruder (9; 12), separately from the thermoplastic material.

3. Method according to claim 1 or 2,
**characterized in that**
the plant material (5) forms a proportion of 70 to 90 % and the thermoplastic material forms a proportion of 10 to 30 % of the material supplied to the extruder (9; 12).

4. Method according to any one of the claims 1 to 3,
**characterized in that**
a biodegradable thermoplastic material is used.

5. Method according to any one of the claims 1 to 4,
**characterized in that**
the thermoplastic material is introduced into the extruder (9; 12) in a melted state.

6. Method according to any one of the claims 1 to 5,
**characterized in that**
additionally a fibrous material, dye or starch-containing material is introduced into the extruder (9; 12) and incorporated into the material mixture.

7. Method according to any one of the claims 1 to 6,
**characterized in that**
the small-sized plant material (5) is heated to a temperature of up to 250°C.

8. Method according to any one of the claims 1 to 7,
**characterized in that**
the plant material (5) is additionally heated on conveying to the extruder (12).

9. Method according to claim 7 or 8,
**characterized in that**
heating takes place by means of a heater, whose heating capacity is controlled by means of a control device, so that for a predeterminable conveying rate of the plant material (5) the desired, clearly defined state of the plant material (5) occurs.

10. Method according to any one of the claims 1 to 9,
**characterized in that**
in the extruder (9; 12) the materials undergo a processing cycle comprising mixing, compaction, as well as subsequent stress relief and venting and said processing cycle is performed at least twice, particularly three times, within the extruder (9; 12).

11. Method according to any one of the claims 1 to 10,
**characterized in that**
prior to complete extrusion of the homogenized material mixture, a defined gas quantity is supplied thereto.

12. Method according to any one of the claims 1 to 11,
**characterized in that**
the material mixture is extruded through a mould (52), being located at the outlet of the extruder (9; 12), to a rod material which, after passing through the mould (52), is bent to a desired shape and/or cut to length.

13. Apparatus, particularly for performing the method according to any one of the preceding claims, having
a twin-shaft extruder (9; 12) which comprises two extruder shafts (14, 15) mounted in a casing (13), a supply opening (16) and a discharge opening (18), a supply device (54) for introducing exclusively small-sized plant material (5) into an introductory extruder section (19) being adapted for a defined heating of the small-sized plant material (5), at least one metering device (48, 49), following the introductory extruder section (19), for introducing thermoplastic material,
wherein on the extruder shafts (14, 15) in the introductory extruder section (19) in each case at least one delivery zone (20) to which is followed in the extrusion direction a compaction zone (26) having a smaller screw pitch than the delivery zone (20), and a kneading zone (22, 38), which follows the metering device (48, 49), for mixing the plant material (5) with the thermoplastic material, and at least one successive delivery zone (40) are provided,
**characterized in that**
- in the introductory extruder section (19) at least two further compaction zones (30, 34) are provided,
- each of said three compaction zones (26, 30, 34) is followed in extrusion direction by a stress relief zone (26, 30, 34) having a larger screw pitch compaired to the respective compaction zone (26, 30, 34) and
- in the vicinity of each stress relief zone (26, 30, 34) in each case one casing opening with a gas vent (42, 44, 46) is located.

14. Apparatus according to claim 13,
**characterized in that**
a heater is provided, the small-sized plant material (5) being heatable by the heater to a defined temperature, and
at least at an outlet of the heater a sensor is provided by means of which it is possible to determine the temperature and optionally further state values of the heated plant material (5).

15. Apparatus according to claim 13 or 14,
**characterized in that**
a control is provided for controlling the drive of the extruder (9; 12) and the heating capacity of the heater in accordance with a predertminable discharge capacity of the extruder (9; 12).

## Revendications

1. Procédé pour produire en continu des corps moulés qui sont composés en majeure partie de matières végétales (5) fragmentées qui sont intégrées à un matériau thermoplastique, dans lequel :
- les matières végétales fragmentées (5) sont d'abord introduites dans une extrudeuse (9 ; 12) sans le matériau thermoplastique,
- les matières végétales fragmentées (5) sont acheminées dans la direction d'extrusion dans une section d'introduction (19) de l'extrudeuse,
- les matières végétales sont soumises pour cela, dans la section d'introduction (19) de l'extrudeuse, à un cycle de transformation dans lequel une humidité résiduelle des matières végétales (5) est transformée en vapeur d'eau qui est évacuée de l'extrudeuse (9 ; 12),
- le matériau thermoplastique est ensuite introduit dans l'extrudeuse (9 ; 12) dans un état solide ou liquide,
- dans l'extrudeuse, les matières végétales fragmentées chauffées sont mélangées au matériau thermoplastique, une température d'extrusion définie étant instaurée qui est supérieure à une température de fusion du matériau thermoplastique, et
- dans une section suivante de l'extrudeuse, le mélange de matières chauffé constitué des matières végétales (5) et du matériau thermoplastique fondu est comprimé et extrudé pour obtenir le corps moulé souhaité,
***caractérisé***
- ***en ce que,*** lors du cycle de transformation pour déshumidifier les matières végétales (5), on comprime, on chauffe et on déshumidifie ensuite par réduction de la pression,
- ***en ce que*** le cycle de transformation pour déshumidifier les matières végétales (5) dans la section d'introduction (19) de l'extrudeuse est effectué au moins trois fois de suite, un état homogène défini des particules des matières végétales (5) étant instauré, et
- ***en ce qu***'après l'ajout du matériau thermoplastique dans au moins une section suivante de la même extrudeuse (9 ; 12), la pression est réduite à une valeur à laquelle une humidité résiduelle des matières végétales (5) est transformée en vapeur d'eau, qui est évacuée de l'extrudeuse (9 ; 12).

2. Procédé selon la Revendication 1, ***caractérisé en ce que*** les matières végétales (5) sont introduites dans l'extrudeuse (9 ; 12) en vrac ou sous forme d'ébauches pré-comprimées séparément du matériau thermoplastique.

3. Procédé selon l'une quelconque des Revendications 1 ou 2, ***caractérisé en ce que*** les matières végétales (5) forment une proportion de 70 % à 90 % et le matériau thermoplastique une proportion de 10 % à 30 % de la masse introduite dans l'extrudeuse (9 ; 12).

4. Procédé selon l'une quelconque des Revendications 1 à 3, ***caractérisé en ce qu***'on utilise un matériau thermoplastique qui est biodégradable.

5. Procédé selon l'une quelconque des revendications 1 à 4, ***caractérisé en ce que*** le matériau thermoplastique est introduit dans l'extrudeuse (9 ; 12) dans un état fondu.

6. Procédé selon l'une quelconque des Revendications 1 à 5, ***caractérisé en ce qu***'en plus, un matériau fibreux, un colorant ou un matériau contenant de l'amidon est introduit dans l'extrudeuse (9 ; 12) et travaillé avec le mélange de matières.

7. Procédé selon l'une quelconque des Revendications 1 à 6, ***caractérisé en ce que*** les matières végétales fragmentées (5) sont chauffées à une température de jusqu'à 250°C.

8. Procédé selon l'une quelconque des Revendications 1 à 7, ***caractérisé en ce que*** les matières végétales (5) sont en plus chauffées lors du transport jusqu'à l'extrudeuse.

9. Procédé selon la Revendication 7 ou 8, ***caractérisé en ce que*** le chauffage s'effectue en utilisant un dispositif de chauffage dont la puissance thermique est commandée au moyen d'un dispositif de commande, de telle sorte que, pour une vitesse de transport pré-déterminable des matières végétales (5), l'état défini souhaité des matières végétales (5) est disponible.

10. Procédé selon l'une quelconque des Revendications 1 à 9, ***caractérisé en ce que,*** dans l'extrudeuse (9 ; 12), les matériaux subissent un cycle de transformation qui comprend mélange, compression, puis détente et dégazage, et ***en ce que*** ce cycle de transformation est effectué au moins deux fois, en particulier trois fois, à l'intérieur de l'extrudeuse (9 ; 12).

11. Procédé selon l'une quelconque des Revendications 1 à 10, ***caractérisé en ce qu***'avant l'extrusion du mélange homogénéisé de matières, du gaz est introduit dans celui-ci selon une quantité définie.

12. Procédé selon l'une quelconque des Revendications 1 à 11, ***caractérisé en ce que*** le mélange de matières est extrudé à travers un outil de moulage (52) à la sortie de l'extrudeuse (9 ; 12) pour former un cordon qui est plié et/ou coupé en longueur selon une forme désirée après le passage à travers l'outil de moulage (52).

13. Dispositif, en particulier pour réaliser le procédé selon l'une quelconque des Revendications précédentes, avec une extrudeuse à double vis (9 ; 12) qui présente deux vis d'extrusion (14, 15) montées dans un boîtier (13), une ouverture d'alimentation (16) et une ouverture de sortie (18),
avec un dispositif d'alimentation (54), pour introduire exclusivement des matières végétales fragmentées (5), sur une section d'introduction (19) de l'extrudeuse qui est conformée pour chauffer de manière ciblée les matières végétales fragmentées (5) et avec au moins un dispositif de dosage (48, 49) placé à la suite de la section d'introduction (19) de l'extrudeuse pour introduire du matériau thermoplastique, dans lequel il est prévu sur les vis d'extrudeuse (14, 15), dans la section d'introduction (19) de l'extrudeuse, au moins une zone d'acheminement (20) et une zone de compression (26) faisant suite à celle-ci dans la direction d'extrusion et présentant une inclinaison de vis inférieure à celle de la zone d'acheminement (20), ainsi qu'une zone de malaxage (22, 38) après le dispositif de dosage (48, 49) pour mélanger les matières végétales au matériau thermoplastique et au moins une autre zone d'acheminement (40) faisant suite à celle-ci,
***caractérisé***
- ***en ce que,*** dans la zone d'introduction (19) de l'extrudeuse, sont prévues au moins deux autres zones de compression (30, 34),
- ***en ce qu***'en regardant dans la direction d'extrusion, chacune des trois zones de compression (26, 30, 34) dans la section d'introduction (19) de l'extrudeuse est suivie d'une zone de détente (28, 32, 36) avec une inclinaison de vis plus grande que dans la zone de compression respective (26, 30, 34), et
- ***en ce qu***'au niveau de chaque zone de détente (28, 32, 36) est placée à chaque fois une ouverture de boîtier avec un dispositif d'extraction de gaz (42, 44, 46).

14. Dispositif selon la Revendication 13, ***caractérisé***
***en ce qu***'il est prévu un dispositif de chauffage, les matières végétales fragmentées (5) pouvant être chauffées à une température définie par le dispositif de chauffage, et
***en ce qu***'au moins à une sortie du dispositif de chauffage, est placé un capteur avec lequel la température et le cas échéant d'autres valeurs d'état des matières végétales (5) chauffées peuvent être déterminées.

15. Dispositif selon la Revendication 13 ou 14, ***caractérisé en ce qu***'il est prévu une commande par laquelle, suivant une puissance de production pré-déterminable de l'extrudeuse (9 ; 12), l'entraînement de l'extrudeuse (9 ; 12) et la puissance thermique du dispositif de chauffage peuvent être commandés.
